(19) Europäisches Patentamt / European Patent Office / Office européen des brevets

(11) **EP 4 418 765 A1**

(12) **EUROPEAN PATENT APPLICATION**

(43) Date of publication:
**21.08.2024 Bulletin 2024/34**

(21) Application number: **23157356.9**

(22) Date of filing: **17.02.2023**

(51) International Patent Classification (IPC):
*H04W 56/00* (2009.01)    *H04W 64/00* (2009.01)

(52) Cooperative Patent Classification (CPC):
**H04W 56/009; G01S 1/00; H04B 7/18513; H04W 56/0045**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Panasonic Intellectual Property Corporation of America**
**Torrance, CA 90504 (US)**

(72) Inventors:
• **KLENNER, Peter**
  **63225 Langen (DE)**
• **NISHIO, Akihiko**
  **Osaka, 571-8501 (JP)**
• **SUZUKI, Hidetoshi**
  **Osaka, 571-8501 (JP)**
• **HERRMANN, Frank**
  **63225 Langen (DE)**

(74) Representative: **Grünecker Patent- und Rechtsanwälte**
**PartG mbB**
**Leopoldstraße 4**
**80802 München (DE)**

(54) **DETERMINATION OF RTT FOR NETWORK-VERIFIED UE LOCATION**

(57) The disclosure relates to a network device for a non-terrestrial network, and respective methods for a network device. More specifically, the network device comprises a transceiver and circuitry which, in operation: obtains a round trip time, RTT, for an estimation of the position of a user equipment, UE, wherein the obtaining of the RTT is based on (i) a user equipment, UE, Rx-Tx time difference, which is a difference between a received timing of a subframe boundary in an downlink frame of a UE and a transmit timing of a subframe boundary in an uplink frame of the UE, which is closest in time to the subframe received by the UE, (ii) a gNB Rx-Tx time difference, which is a difference between a received timing of a subframe boundary in a downlink frame of a gNB and a transmit timing of a subframe boundary in an uplink frame of the gNB, which is closest in time to the subframe received by the gNB, (iii) a timing advance, TA, information for said UE, the TA information indicating a rounded value of a timing advance value, and (iv) a correction of said timing advance, TA, information.

Fig. 13

**Description**

**1. Technical Field**

The present invention relates to transmission of system information relating to a non-terrestrial network. In particular, the present invention relates to apparatuses and methods that generate, signal, receive, and/or utilize the system information relating to a non-terrestrial network.

**2. Description of the Related Art**

Currently, the 3rd Generation Partnership Project (3GPP) works on the technical specifications for the next generation cellular technology, which is also called fifth generation (5G).

One objective is to provide a single technical framework addressing all usage scenarios, requirements and deployment scenarios (see e.g. section 6 of 3GPP TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

One notable feature of 5G is the introduction of non-terrestrial networks (NTN) including a satellite in the communication path between a user device and a network.

SUMMARY

One non-limiting and exemplary embodiment facilitates efficient transmission and reception of system information relating to a non-terrestrial network.

In an embodiment, the techniques disclosed herein feature a network device comprising: a transceiver and circuitry which, in operation obtains a round trip time, RTT, for an estimation of the position of a user equipment, UE, wherein the obtaining of the RTT is based on (i) a user equipment, UE, Rx-Tx time difference, which is a difference between a received timing of a subframe boundary in an downlink frame of a UE and a transmit timing of a subframe boundary in an uplink frame of the UE, which is closest in time to the subframe received by the UE, (ii) a gNB Rx-Tx time difference, which is a difference between a received timing of a subframe boundary in a downlink frame of a gNB and a transmit timing of a subframe boundary in an uplink frame of the gNB, which is closest in time to the subframe received by the gNB, (iii) a timing advance, TA, information for said UE, the TA information indicating a rounded value of a timing advance value, and (iv) a correction of said timing advance, TA, information.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

**Fig. 1**      shows an exemplary architecture for a 3GPP NR system.

**Fig. 2**      is a schematic drawing that shows a functional split between NG-RAN and 5GC.

**Fig. 3**      is a sequence diagram for RRC connection setup/reconfiguration procedures.

**Fig. 4**    is a schematic drawing showing usage scenarios of Enhanced mobile broadband (eMBB), Massive Machine Type Communications (mMTC) and Ultra Reliable and Low Latency Communications (URLLC).

**Fig. 5**    is a block diagram showing an exemplary 5G system architecture for a non-roaming scenario.

**Fig. 6**    illustrates an exemplary NG RAN architecture based on a transparent satellite.

**Fig. 7**    illustrates an exemplary NG RAN architecture based on a regenerative satellite.

**Fig. 8**    illustrates an exemplary scenario where several UEs are served by a satellite.

**Fig. 9**    illustrates an exemplary NTN setup with a satellite moving at a certain velocity.

**Fig. 10**    is a block diagram showing an exemplary structure of a user device and a network device.

**Fig. 11**    illustrates a timing of transmitting and receiving a DL-PRS and a UL-SRS.

**Fig. 12**    is a schematic drawing illustrating a timing of subframes transmitted and received by a gNB or a UE.

**Fig. 13**    is a schematic drawing illustrating a first exemplary correction of the RTT based on the timing of subframes transmitted and received by a gNB or a UE.

**Fig. 14**    is a schematic drawing illustrating a second exemplary correction of the RTT based on the timing of subframes transmitted and received by a gNB or a UE.

**Fig. 15**    illustrates a timing of transmitting a DL-PRS from a gNB to a UE via a satellite.

**Fig. 16**    illustrates a timing of a SRS-config transmitted from a gNB to a UE via a satellite and a UL-SRS transmitted from the UE to the gNB via the satellite.

**Fig. 17**    is a schematic drawing illustrating a first example of a first exemplary implementation, in which the UE Rx-Tx difference and the TA-report are received from the UE and the gNB Rx-Tx difference is received from the gNB.

**Fig. 18**    is a schematic drawing illustrating a second example of a first exemplary implementation, in which the UE Rx-Tx difference and the TA-report are received from the UE and the gNB Rx-Tx difference is received from the gNB.

**Fig. 19**    is a schematic drawing illustrating a first example of a second exemplary implementation, in which the UE Rx-Tx difference and the TA-report are received from the UE and the gNB Rx-Tx difference and the K_offset are received from the gNB.

**Fig. 20**    is a schematic drawing illustrating a second example of a second exemplary implementation, in which the UE Rx-Tx difference and the TA-report are received from the UE and the gNB Rx-Tx difference and the K_offset are received from the gNB.

**Fig. 21**    is a schematic drawing illustrating a first example of a fourth exemplary implementation, in which a corrected UE Rx-Tx difference is received from the UE and the gNB Rx-Tx difference is received from the gNB.

**Fig. 22**    is a schematic drawing illustrating a second example of a fourth exemplary implementation, in which a corrected UE Rx-Tx difference ais received from the UE and a corrected gNB Rx-Tx difference is received from the gNB.

**Fig. 23**    is a schematic drawing illustrating a first example of a fifth exemplary implementation, in which the UE Rx-Tx difference and a corrected TA information are received from the UE and the gNB Rx-Tx difference is received from the gNB.

**Fig. 24**    is a schematic drawing illustrating a second example of a fifth exemplary implementation, in which the UE Rx-Tx difference and a corrected TA information are received from the UE and a corrected gNB Rx-Tx difference is received from the gNB.

**Fig. 25** is a schematic drawing illustrating a first example of a third exemplary implementation, in which the UE Rx-Tx difference and the TA-report are received from the UE and the gNB Rx-Tx difference and the TA-report are received from the gNB.

**Fig. 26** is a schematic drawing illustrating a second example of a third exemplary implementation, in which the UE Rx-Tx difference and the TA-report are received from the UE and the gNB Rx-Tx difference and the TA-report are received from the gNB.

**Fig. 27** is a schematic drawing illustrating sixth exemplary implementation, in which the UE Rx-Tx difference, the TA-report, and the gNB Rx-Tx difference are received from the gNB.

**Fig. 28** is a schematic drawing illustrating seventh exemplary implementation, in which the UE Rx-Tx difference, the TA-report, and the gNB Rx-Tx difference are processed by the gNB and a RTT is received from the gNB.

**Fig. 29** is a schematic drawing illustrating an eight exemplary implementation, in which a corrected UE Rx-Tx difference and a gNB Rx-Tx difference are received from the gNB.

**Fig. 30** is a flow diagram illustrating the steps of verifying the position of a UE based on a position estimation, which is based on a RTT measurement.

DETAILED DESCRIPTION

*5G NR system architecture and protocol stacks*

3GPP has been working on the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

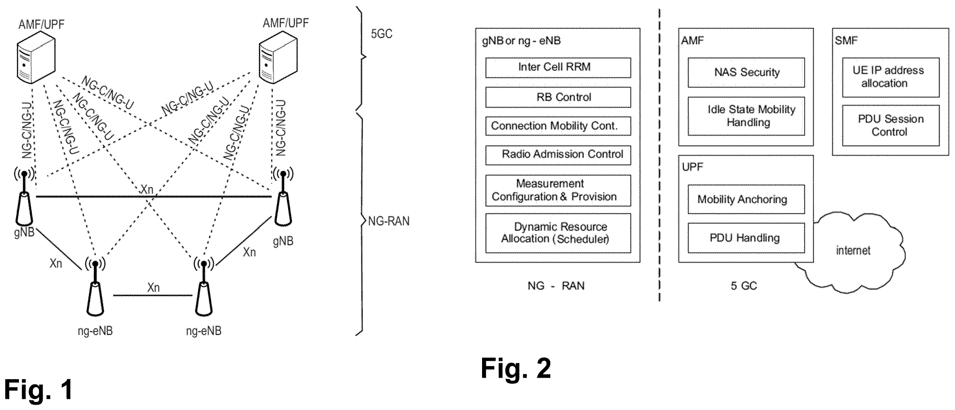

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.3.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10$^{-5}$ within 1ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.3.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;

- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

Moreover, the 5GC may include the Location Management Function, LMF, which includes the following functionality:

- Supports location determination for a UE;
- Obtains downlink location measurements or a location estimate from the UE;
- Obtains uplink location measurements from the NG RAN;
- Obtains non-UE associated assistance data from the NG RAN;
- Provides broadcast assistance data to UEs and forwards associated ciphering keys to an AMF.

*RRC connection setup and reconfiguration procedures*

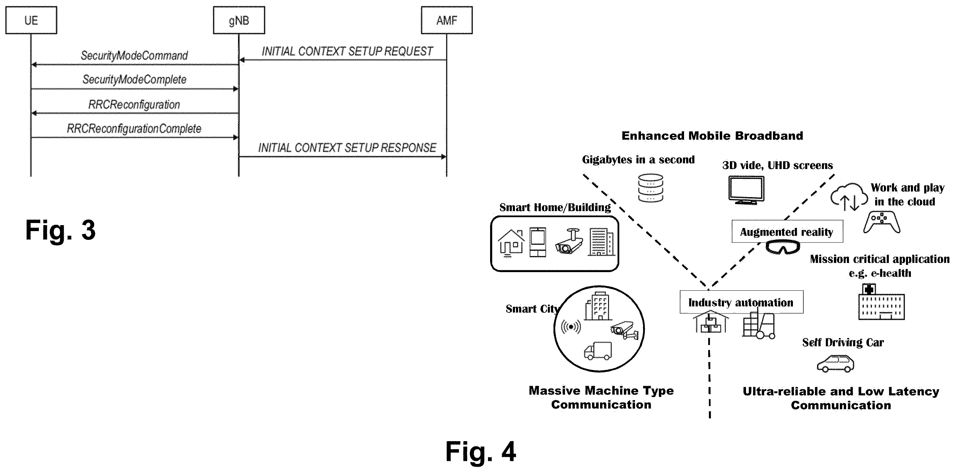

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNB, and a transmitter which, in operation, transmits an initial context setup message, via the NG connection, to the gNB to cause a signaling radio bearer setup between the gNB and a user equipment (UE). In particular, the gNB transmits a Radio Resource Control, RRC, signaling containing a resource allocation configuration information element (IE) to the UE via the signaling radio bearer. The UE then performs an uplink transmission or a downlink reception based on the resource allocation configuration.

*Usage Scenarios of IMT for 2020 and beyond*

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^6$ level), higher availability, packet sizes of up to 256 bytes, time synchronization down to the order of a few $\mu$s where the value can be one or a few $\mu$s depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

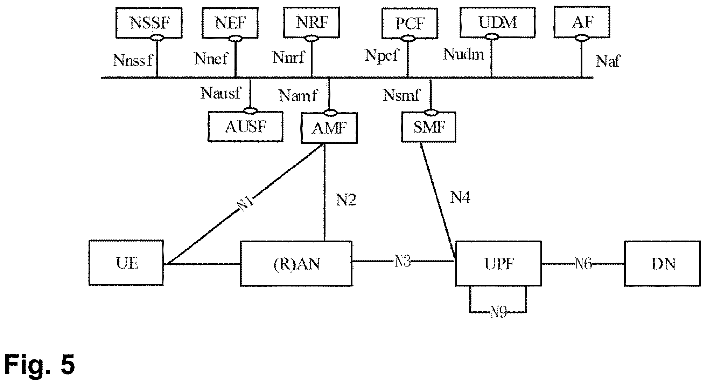

**Fig. 5** illustrates a 5G NR non-roaming reference architecture (see TS 23.501 v16.6.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNB and a UE in accordance with the QoS requirement and control circuitry, which, in operation, performs the services using the established PDU session.

*System information transmission*

System information is downlink broadcast information transmitted periodically by a base station (gNB in 5G, in general a network node). It includes information for a UE to establish connection with the base station. In 5G, UE reads system information for cell camping when it is powered on, for cell selection and re-selection when it is in RRC_IDLE mode. System information provides all necessary details such as system frame number, system bandwidth, PLMN, cell selection and re-selection thresholds etc. to access the network.

System information is structured in a Master Information Block (MIB) and System Information Blocks (SIBs). SIBs accommodate various information. For the present disclosure of relevance may be information related to NTN transmission as will be described below. The MIB information is transmitted (broadcasted) via BCH and PBCH channels while SIBs are transmitted via DL-SCH and PDSCH channels.

In general, system information may be transmitted periodically (so that the newly connecting terminals may obtain it) or on demand. The periodic schedule of system information transmission is configurable by RRC. In particular, a SIB1 (which is referred to by MIB) carries scheduling information which specifies e.g. the system information window (repetition period of the system information transmission pattern), some transmission parameters (e.g. physical layer parameters) to receive the system information, and the mapping (transmission pattern) of the SIBs within the system information window.

*Non-Terrestrial Networks, NTN*

Thanks to the wide service coverage capabilities and reduced vulnerability of space/airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability.

A non-terrestrial network refers to a network, or segment of networks using RF resources on board of a satellite, for instance. NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the gateway and space/airborne platform.

In 3GPP, NR-based operation in a non-terrestrial network (NTN) is studied and described (see e.g. 3GPP TR 38.811, Study on New Radio (NR) to support non-terrestrial networks, version 15.4.0, and 3GPP TR 38.821, Solutions for NR to support non-terrestrial networks, version 16.0.0).

A non-terrestrial network (NTN) refers to a network, or segment of a network, using RF resources on board of an airborne or spaceborne entity for transmission, such as e.g.:

- Spaceborne vehicles: Satellites (including Low Earth Orbiting (LEO) satellites, Medium Earth Orbiting (MEO) satellites, Geostationary Earth Orbiting (GEO) satellites as well as Highly Elliptical Orbiting (HEO) satellites)

- Airborne vehicles: High Altitude Platforms (HAPs) encompassing Unmanned Aircraft Systems (UAS) including Lighter than Air UAS (LTA), Heavier than Air UAS (HTA), all operating in altitudes typically between 8 and 50 km, quasi-stationary.

Exemplary, a UAS or satellite platform is connected to the 5G network through one or several gateways linked to the data network. NTNs may comprise the following system elements: an NTN-capable terminal, which may refer to a 3GPP UE or a terminal that is specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the Gateway Center space/airborne platform. The platform can implement either transparent or regenerative payload transmissions, with the following exemplary characteristics.

- In the transparent payload, the platform acts as a repeater by filtering, converting, and amplifying the wave signal, while the payload is unchanged.

- In the regenerative payload, the platform has some or all of the base station functionalities. It may perform demodulation/modulation, switching/routing, coding/decoding in addition to radio frequency filtering, conversion and amplification.

- The Inter-satellite links (ISL) can optionally be used to form a constellation of satellites. ISL (Inter-Satellite Links) is a transport link between satellites.

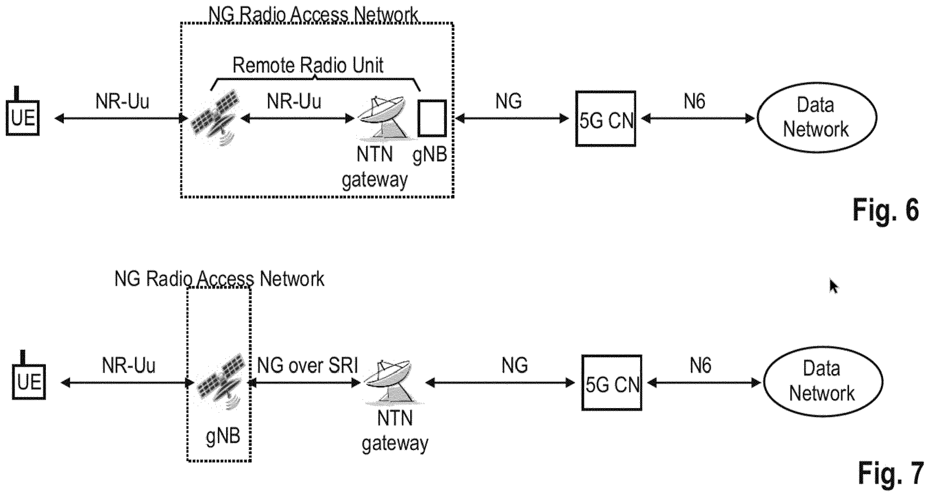

**Fig. 6** illustrates a scenario of a non-terrestrial network, wherein a transmission between a terminal (UE) is performed via a remote radio unit including a satellite and an NTN gateway. A gNB is located at the gateway as a scheduling device. The satellite payload implements frequency conversion and radiofrequency amplifier in both uplink and downlink direction. Hence, the satellite repeats the NR radio interface from the feeder link (between the NTN gateway and the satellite) to the service link (between the satellite and the UE) and vice versa. The Satellite Radio Interface (SRI) on the feeder link is the NR-Uu. In other words, the satellite does not terminate NR-Uu. A satellite in this configuration is referred to as a transparent satellite.

**Fig. 7** illustrates a scenario of a non-terrestrial network, wherein a transmission between a terminal (UE) is performed via a satellite including a gNB as a scheduling device. A satellite in this configuration is referred to as a regenerative satellite. According to one exemplary implementation (see TR 38.321 section 5.2), the NG-RAN logical architecture as described in TS 38.401 is used as baseline for NTN scenarios. The satellite payload implements regeneration of the signals received from Earth. The NR-Uu radio interface is on the service link between the UE and the satellite. The Satellite Radio Interface (SRI) is on the feeder link between the NTN gateway and the satellite. SRI (Satellite Radio Interface) is a transport link between the NTN GW and satellite.

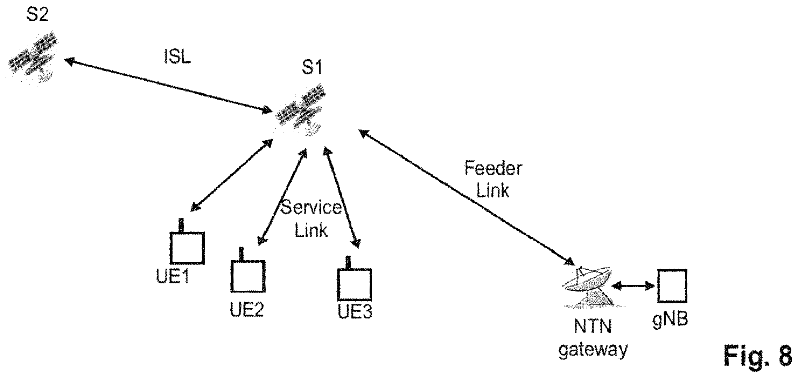

**Fig. 8** illustrates an exemplary scenario where three UEs (UE1, UE2, UE3) are served by a satellite S1. The satellite S1 is communicating via a feeder link with a gNB and NTN gateway as well as via an inter-satellite link (ISL) with another neighbor satellite S2.

There are different types of satellites that provide communications, Low-Earth Orbit (LEO) or Geosynchronous Equatorial Orbit (GEO) (also called geo-stationary) satellites. Geostationary satellites appear fixed as they move at the same angular velocity as the Earth and orbit along a path parallel to Earth's rotation, thereby providing coverage to a specific area. From the ground, GEO satellites appear to be stationary. LEO satellites revolve at an altitude between 160 to 2,000 kilometers (99 to 1,200 miles). A constellation of LEO satellites can provide continuous, global coverage as the satellite moves. Unlike GEO satellites, LEO satellites also fly at a much faster pace because of their proximity to Earth.

There are many applications for GEO satellites, including weather forecasting, satellite radio, and television. Because GEO satellites orbit at such a high altitude, however, there is a longer communication time lag (latency) as the signals travel to and from these satellites. For this reason, many critical communications are handled over LEO satellite networks, which allow for faster connectivity without wires or cables.

However, in general, in the NTN, there may be various different kinds of platforms, including not only satellites but also UAS (Unmanned Aerial System) platforms, examples of which are listed in Table 1 (corresponding Table 4.1-1 of 3GPP TR 38.821, see also 3GPP TR 38.821, Section 4.1, Non-Terrestrial Networks overview):

*Table 1: Types of NTN platforms*

| Platforms | Altitude range | Orbit | Typical beam footprint size |
|---|---|---|---|
| Low-Earth Orbit (LEO) satellite | 300 - 1500 km | Circular around the earth | 100-1000 km |
| Medium-Earth Orbit (MEO) satellite | 7000 - 25000 km | | 100-1000 km |
| Geostationary Earth Orbit (GEO) satellite | 35 786 km | notional station keeping position fixed in terms of elevation/azimuth with respect to a given earth point | 200-3500 km |
| UAS platform (including High Altitude Platform Station (HAPS)) | 8 - 50 km (20 km for HAPS) | | 5-200 km |
| High Elliptical Orbit (HEO) satellite | 400 - 50000 km | Elliptical around the earth | 200-3500 km |

For LEO, MEO, and HEO satellites, which do not keep a their position fixed with respect to a given earth point, a satellite beam, which corresponds to a cell or PCI (Physical Cell ID) or to an SSB (Synchronization Signal Block) beam of the NR wireless system may be moving over the earth.

An NTN scenario that provides cells which are continuously moving on the Earth (e.g. a LEO, MEO, or HEO based NTN), is referred to as an earth moving cell scenario. The continuous cell motion on the Earth is due to the operation where the satellite beam is fixed with respect to the NTN platform. Therefore, the footprint of the cell, which may correspond to several satellite beams or one satellite beam, slides on the earth surface with the motion of the NTN platform (e.g. a LEO satellite).

Information about the orbital trajectories of satellites are contained in ephemeris data (or "satellite ephemeris data"). There are different possible representations of ephemeris data, wherein one possibility is to use orbital parameters such as semi-major axis, eccentricity, inclination, right ascension of the ascending node, argument of periapsis, mean anomaly at a reference point in time, and the epoch. The first five parameters can determine an orbital plane (orbital plane parameters), and the other two parameters are used to determine exact satellite location at a time (satellite level parameters). Orbital plane parameters and satellite level parameters are exemplified in Section 7.3.6.1, Representation of Complete Ephemeris Data, of 3GPP TR 38.821 V16.0.0). Another possible option is to provide coordinates of the satellite location (x,y,z), a velocity vector (vx,vy,vz) and a reference point in time.

*Table 2: Elements of Ephemeris*

| Orbital plane parameters | $\sqrt{a}$ | Square root of semi major axis a (semi-major axis) |
|---|---|---|
| | e | Eccentricity (eccentricity) |
| | $i_0$ | Inclination angle at reference time (inclination) |
| | $\Omega_0$ | Longitude of ascending node of orbit plane (right ascension of the ascending node) |
| | $\omega$ | Argument of perigee (argument of periapsis) |
| Satellite level parameters | $M_0$ | Mean anomaly at reference time (true anomaly and a reference point in time) |
| | toe | Ephemeris reference time (the epoch) |

In an NTN system, several satellites may share a common orbital plane. In such cases, some ephemeris data may be provided for orbital planes rather than for single satellites, to reduce the amount of data. The ephemeris data per orbital plane may be stored in the UE or in the UE's Subscriber Identity Module (SIM). However, for networks with many satellites, the size of ephemeris data can be rather large. Accordingly, rather than storing the ephemeris data, the ephemeris data may at least partially (or even fully) be transmitted from a gNB.

For instance, satellite level orbital parameters for all satellites that may serve a UE may be stored in the UE or in the SIM, and the ephemeris data for each satellite is linked to a satellite ID or index. The satellite ID or index of the serving satellite may then be broadcast in system information so that the UE can find the corresponding ephemeris data in the UE's SIM or storage. Alternatively, satellite level orbital parameters of the serving satellite may be broadcast in system information and UE will derive the position coordinates of the serving satellite. The ephemeris data of the neighboring satellites can also be provided to UE via system information or dedicated RRC signaling. In case the baseline orbital plane parameters are provisioned in the UE or SIM, it may be sufficient to broadcast the mean anomaly at a reference point in time and the epoch need to be broadcast to UE, so that overhead can be reduced.

*Timing advance and epoch time in NTN*

NTN scenarios are characterized by long propagation delays, and UEs should account for them in the **timing advance** when transmitting on the uplink. Timing advance (TA) is a delay used to control the uplink transmission timing of an individual UE. It helps to ensure that uplink transmissions from all UE are synchronized when received by the base station (network node). Already in terrestrial systems, timing advance to be applied at a UE is transmitted from the network node to the particular UE.

The NTN transmission chain is split into two segments: between gateway and satellite (the feeder link), and between satellite and UE (the service link). The delay on the feeder link is referred to as "common delay" because it is the same for any UEs (see, e.g. UE1, UE2, and UE3 of Fig. 8) served by the same NTN entity (e.g. satellite S1). The delay on the service link is referred to as "UE-specific delay" as it may vary for the different UEs due to their possibly different locations.

To avoid revealing the physical position of the network node (gNB) to UEs, 3GPP RAN1 decided to signal the feeder link delay as a common timing advance value (see, Section 6.3.4 of 3GPP TR 38.821, v. 1.1.0) especially in architectures as shown in Fig. 6.

Autonomous acquisition of the service link TA at a UE is possible with UE known location and satellite ephemeris. UE own location is typically available to a UE, especially if it can be assumed that a UE has an access to a positioning system, e.g. Global Navigation Satellite System (GNSS) such as a global positioning system (GPS) or the like. Ephemeris data can be made available to the UE as mentioned in some examples above (stored in a SIM and/or obtained from system information signaling or the like).

However, in general, the present disclosure is not limited to fully autonomous determination of service link TA component. Rather, also the acquisition of the service link TA component may be assisted by signaling of a UE specific information to a particular UE. The common TA, which refers to the common component of propagation delay shared by all UEs within the coverage of same satellite beam/cell, may be broadcasted by the network per satellite beam/cell. The calculation of this common TA is conducted by the network with assumption on at least a single reference point per satellite beam/cell.

In other words, in an exemplary scenario, UEs compute the UE-specific delay autonomously since they are assumed to be GNSS-capable. UEs compute the feeder-link delay based on the polynomial for the common TA. The sum of these delays provide the UE with the applicable timing advance value for UL transmissions.

However, it was found that the feeder-link delay may be time-variant, in particular for fast-moving LEO satellites. A single value representing the common TA may thus lead to large approximation errors or require very frequent SIB updates resulting. In order to reflect the time variance, the common TA may be represented (approximated), e.g. as a polynomial.

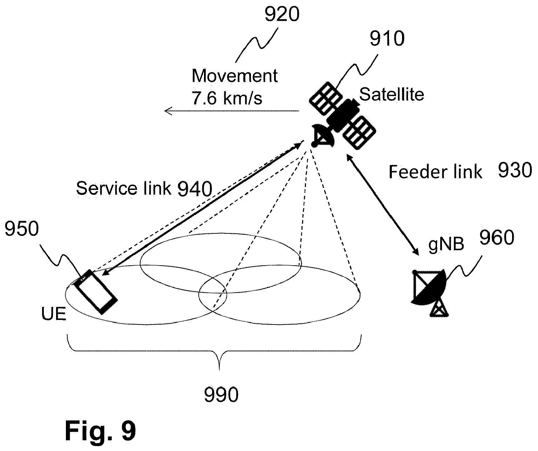

As a particular scenario example, in Rel.17 NTN, UE transmission timing is adjusted based on the propagation delay. This is illustrated in **Fig. 9.** A satellite 910 moves (illustrated by the movement arrow 920), e.g. with a velocity of 7.6 km/s. It provides a plurality (here 3) cells 990.

Service link 940 delay (between a UE 950 and a satellite 910) is calculated using satellite ephemeris (i.e. information on satellite location) and UE GNSS location information. Satellite ephemeris is broadcasted via system information, and, in particular, via a system information block (SIB) carrying NTN information, sometimes referred to as NTN-SIB. The system information is broadcasted by the satellite 910. The present disclosure is not limited to any particular network configuration. In some communication systems that may still profit from the present disclosure, the satellite may be controlled to broadcast the system information by the gNB 960.

Feeder link 930 delay (between the satellite 910 and a gNB 960) may be compensated by the network (e.g. by the gNB) or may be compensated by the UE 950 based on common TA parameters broadcasted via the NTN-SIB.

The common TA parameters include information on feeder link delay and its variation e.g. due to LEO satellite (or other kind of satellite) movement.

The common timing advance parameters and further NTN related parameters are carried by the system information, e.g. in a specific NTN-SIB. The parameters carried therein may include one or more (or all) of the following:

- Ephemeris;
- Common TA parameters;
- Validity duration for UL sync information;
- t-Service (the timing information on when the serving cell is going to stop serving the area);
- Cell reference location;
- Epoch time;
- K_mac;
- Cell-specific Koffset;
- Indication for network enabled/disabled TA report
- Polarization indcation.

As mentioned above, the ephemeris may include satellite orbital parameters such as an anomaly (e.g. mean anomaly M at epoch time in radians); eccentricity; inclination; longitude (of ascending node); periapsis; and semi major axis. The ephemeris may include coordinates of satellite position state vector and coordinates of satellite velocity state vector.

Common TA parameters include e.g. parameters TACommon, TACommonDrifr, TACommonDriftVariant, and TACommonDriftVariation. In particular, TACommon is a network-controlled common timing advanced value and it may include any timing offset considered necessary by the network. TACommon with value of 0 is supported. The granularity of TACommon is $4.07 \times 10^{-3}$ μs. TACommonDrift indicates drift rate of the common TA. The granularity of TACommonDrift is $0.2 \times 10^{-3}$ μs/s. taCommonDriftVariant indicates drift rate variation of the common TA. The granularity of TACommonDriftVariant is $0.2 \times 10^{-4}$ μs/s^2. Values are given in unit of corresponding granularity.

t-Service indicates the time information on when a cell provided via NTN quasi-Earth fixed system is going to stop serving the area it is currently covering. Cell reference location is a reference location of a cell provided via NTN quasi-Earth fixed system.

Epoch time indicates the epoch time for the assistance information (i.e. Serving satellite ephemeris and Common TA parameters). When explicitly provided through SIB, or through dedicated signaling, epoch time is the starting time of a DL sub-frame, indicated by an SFN and a sub-frame number signaled together with the assistance information. The reference point for epoch time of the serving satellite ephemeris and Common TA parameters is the uplink time synchronization reference point.

K_mac is a scheduling offset provided by network if downlink and uplink frame timing are not aligned at gNB. It may be needed for UE action and assumption on downlink configuration indicated by a MAC-CE command in a PDSCH. When UE is not provided by network with a K_mac value, UE assumes K_mac = 0. For the reference subcarrier spacing value for the unit of K_mac in FR1 (Frequeny Range 1 that lies between 410 MHz - 7125 MHz.), a value of 15 kHz is used. The unit of K_mac is number of slots for a given subcarrier spacing.

The CellSpecific_K_offset is a scheduling offset used for the timing relationships that need to be modified for NTN. The unit of K_offset is number of slots for a given subcarrier spacing of 15 kHz.

ntnPolarizationDL may be optionally included within the NTN-SIB (sometimes also referred to as SIB NTN, SIB-NTN, or the like). If present, this parameter indicates polarization information for downlink transmission on service link: including Right hand, Left hand circular polarizations (RHCP, LHCP) and Linear polarization. Correspondingly, ntnPolarizationUL, if present, indicates polarization information for uplink service link. If not present and ntnPolarizationDL is present, UE assumes a same polarization for UL and DL.

As mentioned above, the epoch time is the reference time of the ephemeris and common TA parameters (assistance information). In other words, ephemeris and common TA parameters are generated based on the epoch time. The UE 950 calculates satellite 910 location and feeder link 930 delay based on the time indicated as epoch time and determined satellite location based on ephemeris. In NTN, epoch time is usually determined in terms of on SFN (system frame number) and subframe number in case it is signaled in the NTN-SIB. In other contexts, such as the Unix operating system, epoch time is the number of seconds that have elapsed since 00:00:00 UTC on 1 January 1970 (also called the Unix epoch). It is a continuous time without a wrap-around.

It is noted that the epoch time does not have to be signaled explicitly in the NTN-SIB and may be determined implicitly, e.g. according to the system information window.

As for the usual system information content (SIBs used for the terrestrial networks), there is a validity period (duration) for assistance information including ephemeris and common TA parameters, during which the estimated values (i.e. satellite location and feeder link delay) have a sufficient accuracy. The validity period is indicated as validity duration (VD), for instance within the NTN-SIB. It denotes validity duration for the entire content of the NTN-SIB. The validity may be longer than the SFN cycle 1110. For example, for LEO, the maximum validity duration is currently envisaged to be 240s (or even infinite for GEO).

For example, 3GPP TS 38.321 provides a Timing Advance Report MAC CE with the Timing Advance field indicating the least integer number of slots greater than or equal to the Timing Advance value, i.e., UE reports the TA value as ceil(TA value/SD)*SD with SD denoting slot duration and ceil( ) denoting the ceiling function.

*Round Trip Time*

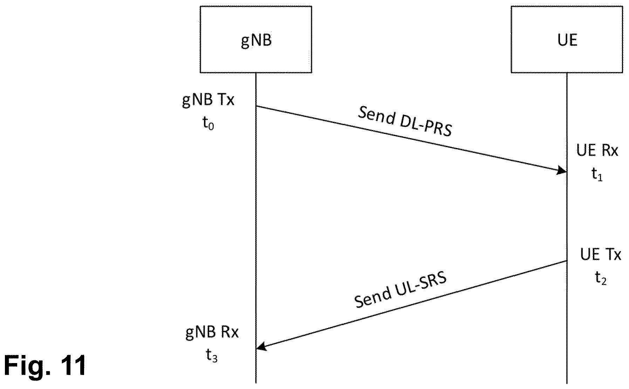

For location management of a UE, it may be desirable that network independently verifies a location reported by said UE. Such a verification may be performed based on the round trip time, RTT, of a signal. For example, as shown in **Fig. 11,** the gNB sends a downlink signal, e.g. a downlink positioning reference signal (DL-PRS), at time $t_0$. Said signal is received by the UE at time $t_1$. For example, the UE responds at time $t_2$ by transmitting an uplink signal, e.g. an uplink sounding reference signal (UL-SRS). The uplink signal may be received by the gNB at time $t_3$.

In the example of Fig. 11, the round trip time RTT is determined as

$$RTT = (t_3 - t_0) + (t_1 - t_2).$$

In a terrestrial setting with stationary gNB and UE, the UE location may be determined as

$$c_0 \frac{RTT}{2} = \left\| p_{gNB} - p_{UE} \right\|,$$

wherein $c_0$ corresponds to the speed of light, $p_{gNB}$ is a vector having three components, which indicates the location of the gNB, $p_{UE}$ is a vector having three components, which indicates the location of the UE, and the operator ||. || yields the Euclidean norm of its argument, i.e., the distance between gNB and UE. Since the UE location is a vector with three components, RTT is to be measured at least three times, which is referred to as multi-RTT (Multi Round Trip Time).

For example, in a terrestrial setting, the RTT may be measured using at least three different transmission and reception points (TRPs).

For UE location verification in NTN using Multi-RTT with a single satellite in view, the RTT is measured repeatedly with the satellite at different points in time. The Location Management Function (LMF), which is explained in section 5G *NR functional split between NG-RAN and* 5GC above, may establish a system of equations, which all relate the RTT with the position of the UE. The system of equations is solved numerically for the position of the UE in an iterative fashion.

3GPP TS 38.215 defines UE and gNB Rx-Tx time differences (RTTD) which are reported to the LMF for determining RTTs and UE position. The gNB time difference between reception Rx and transmission Tx is defined as $T_{gNB-RX}$ - $T_{gNB-TX}$, where $T_{gNB-RX}$ is the Transmission and Reception Point (TRP) received timing of uplink subframe i containing SRS associated with UE, defined by the first detected path in time, and $T_{gNB-TX}$ is the TRP transmit timing of downlink subframe j that is closest in time to the subframe i received from the UE.

The UE time difference between reception Rx and transmission Tx is defined as $T_{UE-RX}$ - $T_{UE-TX}$, where $T_{UE-RX}$ is the UE received timing of downlink subframe i from a Transmission Point (TP), defined by the first detected path in time, and $T_{UE-TX}$ is the UE transmit timing of uplink subframe j that is closest in time to the subframe i received from the TP.

For the small cells of a terrestrial network, it can be shown that RTT is the sum of UE-RTTD and gNB-RTTD (see clause 8.10.4 of 3GPP TS 38.305). For larger cells of a NTN, a problem exists in connection with timing advance (TA). For example, for a LEO satellite at altitude 600 km (LEO-600) the one-way delay is at least 2 ms, and the RTT is at least 8 ms. This means that the TA will also be at least 8 ms, which is equivalent to the duration of eight subframes.

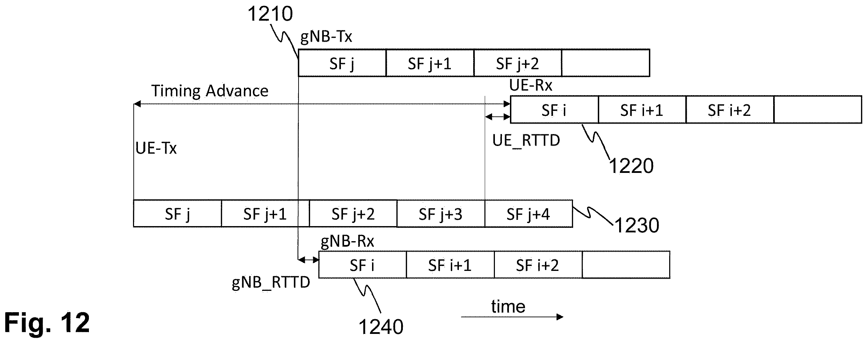

An exemplary timing is shown in **Fig. 12,** which indicates that the gNB-RTTD is based on the TRP transmit timing $T_{gNB-TX}$ of downlink subframe j 1210 that is closest in time to the subframe i 1240 received from the UE. For the UE-RTTD, the UE transmit timing $T_{UE-TX}$ of uplink subframe j+4 1230 is closest in time to the subframe i 1220 received from the TP. Under the notion of UL subframes closest in time to an DL subframes, the computing of RTT as the sum of UE-RTTD and gNB-RTTD underestimates the RTT, since multiple subframes (SFs j, j+1,j+2 and j+3 in the example in Fig 12) are implicitly ignored.

As mentioned above TS 38.321 provides a Timing Advance Report MAC CE. However, said reported TA-value includes a rounding operation. Due to rounding up the TA-value, network cannot make direct use of the reported TA-value for determination of the RTT.

5G NR provides, for example, a positioning method based on multiple round trip time (multi-RTT) measurements. Such multi-RTT positioning method is robust against network time synchronization errors. For multi-RTT LMF initiates the procedure whereby in a terrestrial network multiple TRPs and a UE perform the gNB Rx-Tx and UE Rx-Tx measurements respectively.

*Embodiments*

In order to facilitate the determination of the round trip time, the obtaining is based on a correction of the timing advance information. Such RTT may be applied, for example, in an estimation of the location of the UE and/or a verification of a position of an UE.

In the following, UEs, base stations, and procedures to meet these needs will be described for the new radio access technology envisioned for the 5G mobile communication systems, but which may also be used in LTE mobile communication systems or other communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user device** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term **Non-terrestrial network, NTN, entity** can be broadly understood as an entity of the non-terrestrial network, such as spaceborne vehicles or airborne vehicles, as introduced in the above section relating to NTN. In the following, satellites will be assumed only as an example for such an NTN entity, while it should remain clear that also the other examples of NTN entities are covered.

For the following embodiments it is exemplarily assumed that data transmission takes place between the UE, via an NTN entity (e.g. satellite), and a network node. The term **network node** refers to a base station (e.g. gNB) as in Fig. 6 or to another entity with interface to core network (CN), such as the NTN gateway shown in Fig. 7. The scenario already introduced above of Fig. 8 and 9 can be referred to exemplarily in the following. For sake of simplifying the explanation, it is exemplarily assumed that the gateway and gNB (forming the network node) are collocated, thus avoiding a possible physical and logical separation of the gateway and the gNB (base station) in the subsequent explanations. Consequently, in the following, the embodiments will be described as occurring between the UE, the NTN entity, and the gNB, without specifically mentioning that a gateway is located between the NTN entity and the gNB or integrated in the gNB.

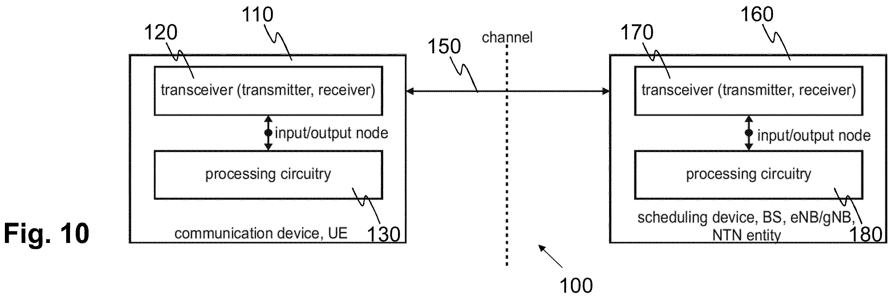

**Fig. 10** illustrates a general, simplified and exemplary block diagram of a user equipment 110 (also termed communication device) and a scheduling device 160 (here exemplarily assumed to be located in the base station, e.g. the eLTE eNB (alternatively termed ng-eNB) or the gNB in 5G NR). The UE 110 and eNB/gNB 160 are communicating with each other over a (wireless) physical channel respectively using the transceiver. The communication is illustrated by an arrow 150. Furthermore, the NTN entity can have the same or similar structure as the scheduling device, e.g. including a transceiver and processing circuitry. Accordingly, the UE 110 and the gNB 160 are part of a communication system 100.

Both devices 110 and 160 may comprise a transceiver 120, 170 and processing circuitry 130, 180. The transceiver 120, 170 in turn may comprise and/or function as a receiver and a transmitter. The processing circuitry 130, 180 may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different implementations of an improved transmission procedure will be described in the following. In said connection, improved entities, such as improved UEs, improved NTN entities, and improved base stations are presented, which participate in the improved transmission procedure. Corresponding methods for the UE, NTN entity and BS behavior are provided as well.

According to an embodiment, a network device (such as a NTN entity 160) is provided. The network device comprises a transceiver (such as the transceiver 170 shown in Fig. 10) and circuitry (such as the processing circuitry 180 in Fig. 10).

The circuitry, in operation, obtains a round trip time, RTT, for an estimation of the position of a user equipment, UE. Such position estimation may be applied for example in the verification of a position reported by an UE. The obtaining of the RTT is based on a user equipment, UE, Rx-Tx time difference, which is a difference between a received (Rx) timing of a subframe boundary in an downlink frame of a UE and a transmit (Tx) timing of a subframe boundary in an uplink frame of a the UE, which is closest in time to the received subframe received by the UE. Moreover, the obtaining of the RTT is based on a gNB Rx-Tx time difference, which is a difference between a received timing of a subframe boundary in a downlink frame of a gNB and a transmit timing of a subframe boundary in an uplink frame of the gNB, which is closest in time to the subframe received by the gNB. Furthermore, the obtaining of the RTT is based on a timing advance, TA, information for said UE, the TA information indicating a rounded value of a timing advance value, in addition, the obtaining of the RTT is based on a correction of a timing advance, TA, information for said UE.

The position estimation may be obtained by the Location Management Function (LMF), which is explained in section *5G NR functional split between NG-RAN and 5GC* above. The LMF is a network entity in the 5G Core Network (5GC) (TS 29.572). As for an example, a network entity may be a dedicated piece of hardware or a virtualized process within a processing device, which performs the functions of the LMF.

The above-described network device that obtains the RTT may include the functions of the LMF or may provide the obtained RTT to the LMF, e.g. for a position estimation.

The transceiver, in operation, may receive information regarding a non-terrestrial network from a network node. The transceiver may perform the reception controlled by the circuitry. In other words, the circuitry may control (instruct) the transceiver, including instructing the receiver to receive information. The network node here is for example the NTN device (such as a satellite or an airborne vehicle), a gNB or a UE. In particular, the transceiver may receive information based on one or more of the UE Rx-Tx time difference, the gNB Rx-Tx time difference, the TA information and a correction of the TA information.

As mentioned above, a rounded value for a TA is provided in a MAC-CE (cf. TS 38.321) indicating the least integer number of slots greater than or equal to the timing advance value, which is referred to as TA-report herein. In other words, the TA-report value of a UE is readily available in a NTN. For example, the TA-report value is determined as

$$TA_{report} = ceil\left(\frac{TA}{SD}\right) \cdot SD,$$

wherein *TA* denotes a timing advance value, *SD* is a slot duration and *ceil*( ) represents the ceiling function which returns the least integer greater than or equal to its argument.

For example, the RTT is determined based on the Rx-Tx time difference of a UE, the Rx-Tx time difference of a gNB, the TA-report as TA information and a correction of said TA information.

In an exemplary implementation, the RTT may be determined according to

$$RTT = UE_{RTTD} + gNB_{RTTD} + TA_{report} - ceil\left(\frac{UE_{RTTD}}{SD}\right) \cdot SD,$$

wherein, $UE_{RTTD}$ represents the UE Rx-Tx time difference, $gNB_{RTTD}$ represents the gNB Rx-Tx time difference, $TA_{report}$

represents the TA information and $ceil\left(\frac{UE_{RTTD}}{SD}\right) \cdot SD$ represents the correction of the TA information, wherein $SD$ is a slot duration, and $ceil()$ represents the ceiling function.

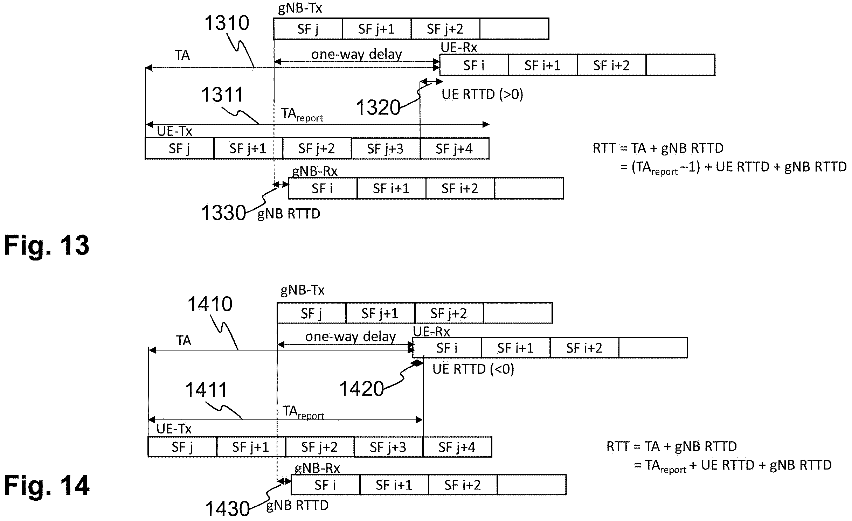

An exemplary implementation is shown in Figs. 13 and 14 for a case where the slot duration is identical to the subframe duration. The TA 1310 in Fig. 13 is greater than the subframe or slot duration of SF j to SF j+3 in the UE uplink frame UE-Tx. Thus, the TA information, TA-report 1311 is rounded up to a duration of the five subframes or slots SF j to SF j+4. The UE Rx-Tx time difference $UE_{RTTD}$ refers in the example of Fig. 13 to the subframe boundary, which is closest in time to the subframe UE received timing of downlink subframe SF i in frame UE-Rx. In Fig. 13, the UE Rx-Tx time difference $UE_{RTTD}$ is greater than zero as the subframe boundary closest in time refers to the boundary between subframes SF j+3 and SF j+4. Thus, the available TA-report is corrected by one subframe or one or more slots in order to obtain an accurate RTT.

In Fig. 13, the RTT is obtained as $RTT = TA + gNB_{RTTD} = (TA_{report} -1) + UE_{RTTD} + gNB_{RTTD}$, wherein the timing advance 1310 is obtained by using the readily available values of TA-report 1311 and the UE Rx-Tx time difference $UE_{RTTD}$ 1320 together with the appropriate correction of one subframe in this example. The RTT is obtained as sum of said obtained TA 1310 and the gNB Rx-Tx time difference $gNB_{RTTD}$ 1330.

In Fig. 14, the TA 1410 is greater than the subframe or slot duration of SF j to SF j+2 in the UE uplink frame UE-Tx, which leads to a rounding up and thus a TA-report value corresponding to the duration of slots SFj to SF j+3 in the UE uplink frame UE-Tx. In this example, the UE Rx-Tx time difference $UE_{RTTD}$ 1420 is smaller than zero as a result of the subframe boundary closest in time referring to the boundary between subframes SF j+3 and SF j+4. Thus, in this example the correction value is zero and the RTT is obtained as $RTT = TA + gNB_{RTTD} = TA_{report} + UE_{RTTD} + gNB_{RTTD}$, wherein the timing advance 1410 is obtained by using the readily available values of TA-report 1411 and the UE Rx-Tx time difference $UE_{RTTD}$ 1420 together with the appropriate correction. The RTT is obtained as sum of said obtained TA 1410 and the gNB Rx-Tx time difference $gNB_{RTTD}$ 1430.

For the examples in Figs. 13 and 14 where the slot duration is identical to the subframe duration, the absolute value of the term $\frac{UE_{RTTD}}{SD}$ in the correction term $ceil\left(\frac{UE_{RTTD}}{SD}\right)$ is smaller than one, and thus the ceiling function yields zero slots or one slot as appropriate correction. In other words, in the case when the slot duration is identical to the subframe duration, the value of the sign bit of the UE Rx-Tx time difference $UE_{RTTD}$ indicates whether there is a correction by one slot or by zero slots. In particular, for $UE_{RTTD} < 0$, the sign bit is equal to 1, and its inverse equals the correction term $ceil\left(\frac{UE_{RTTD}}{SD}\right) = 0$. For $UE_{RTTD} > 0$, the sign bit is equal to 0, and its inverse equals the correction term $ceil\left(\frac{UE_{RTTD}}{SD}\right) = 1$.

In general, the correction is not limited to the case when the slot duration is identical to the subframe duration.

A slot is part of 5G NR's frame structure, which includes frames, subframes, and slots. Frames and subframes have duration of 10ms and 1ms, respectively. A slot is defined as a set of 14 consecutive OFDM-symbols. The slot duration follows from the network configuring the subcarrier spacing of a bandwidth-part. A bandwidth-part may be configured for single UE or multiple UEs. Depending on the subcarrier spacing of the 14 OFDM symbols, the slot duration can be 1ms, 0.5ms, 0.25ms, 0.125ms, and 0.06125ms.

The obtaining of the RTT may be further based on a feeder-link delay on downlink and/or a feeder-link delay on uplink. The feeder-link is discussed in detail above with reference to Figs. 6 to 8. In other words, a determination of the RTT may include the feeder-link delay on downlink and/or a feeder-link delay on uplink.

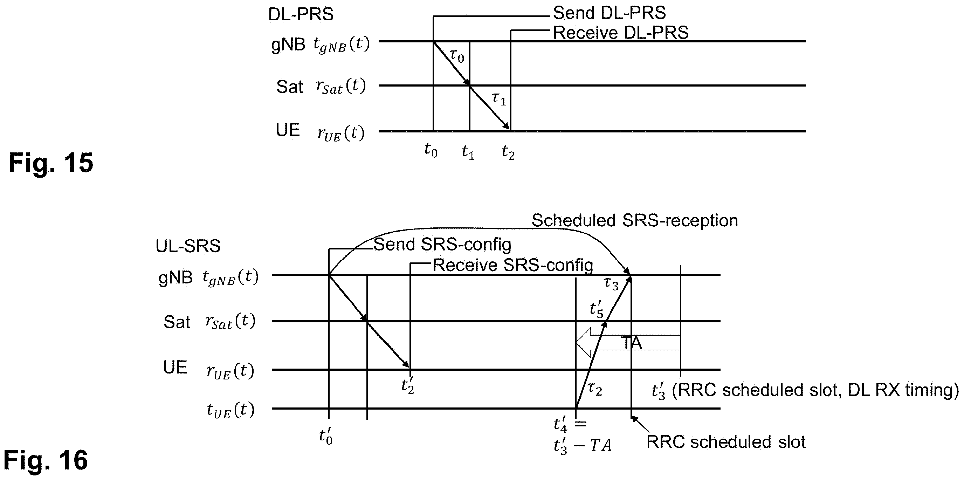

The feeder-link delay on the downlink is exemplarily shown in **Fig. 15.** A gNB transmits a DL-PRS to a UE via a NTN entity, e.g. a satellite. For example, the gNB transmits the DL-PRS at time $t_0$, which is received by the satellite at time $t_1$. The duration $\tau_0 = t_1 - t_0$ corresponds to the feeder-link delay in the downlink. The DL-PRS is received at time $t_2$ at the UE.

The feeder-link delay on the uplink is exemplarily shown in **Fig. 16.** An exemplary scheduled SRS-reception is performed. The gNB configures a UE's SRS signal via SRS resources, which can be grouped into SRS resource sets. Periodic SRS resource sets are configured by RRC signaling. Semi-persistent SRS resource sets add flexibility by MAC CE control. The gNB transmits a SRS-config at time $t'_0$ , which is received at time $t'_2$ at the UE. The UE responds by transmitting an UL-SRS at time $t'_4$ . The time $t'_4$ is chosen such that the RRC scheduled slot for reception $t'_3$ at gNB is met. The duration $\tau_3$ between the transmission of the UL-SRS by the satellite and the reception at the gNB corresponds to the feeder-link delay on the uplink.

In order to improve an estimation of the location of an UE, an RTT measurement may include a correction regarding the feeder-link delay on downlink $\tau_0$ and/or the feeder-link delay on uplink $\tau_3$. Thus a residual delay on the service link may be defined as $RTT^S = RTU - \tau_0 - \tau_3$.

The network device may receive the feeder-link delay on downlink and the feeder-link delay on uplink from the UE, the gNB, or a NTN entity. Such a NTN entity may be for example a proprietary entity such as a NTN control center. In other words, information regarding the feeder-link delay on downlink and the feeder-link delay on uplink may be available at the UE, the gNB and/or the NTN entity. Said information may be provided to the network device by any of the UE, the gNB and the NTN entity. In particular, the transceiver included in the network device may receive the information regarding the feeder-link delay on downlink $\tau_0$ and the feeder-link delay on uplink $\tau_3$ and may provide said information to the circuitry.

For multi-RTT, gNBs and UEs transmit, for example, downlink positioning reference signal (DL-PRS) and uplink sounding reference signal (UL-SRS) respectively. gNB configures UL-SRS to the UE using RRC protocol. Whereas, LMF provides the DL-PRS configuration using the LTE positioning protocol (LPP) to the UE. In 4G, the positioning support between a UE and the location server is handled by said LTE Positioning Protocol (LPP). This protocol has been extended to also support 5G positioning between a UE and LMF.

The UE may transmit measurement results using LPP to the LMF. gNB may transmit measurement results using the NR positioning protocol A (NRPPa)to the LMF for UE location estimation. Due to the new next generation interface between the NG-RAN and the core network, the new NR positioning protocol A (NRPPa) protocol was introduced to carry the positioning information between NG-RAN and LMF over the next generation control plane interface (NG-C).

$$RTT^S = UE_{RTTD} + gNB_{RTTD} + TA_{report} - ceil\left(\frac{UE_{RTTD}}{SD}\right) \cdot SD - \tau_0 - \tau_3$$

Based on the equation various functional splits between UE, gNB and LMF are feasible for computing RTT.

For example, the UE may provide information regarding one or more of $UE_{RTTD}$, $TA_{report}$ and feeder-link delays to the network device. UE may use LPP to report the measurement results to the network device, e.g. to the LMF.

For example, the gNB may provide information regarding one or more of $gNB_{RTTD}$, $TA_{report}$ and feeder-link delays to the network device. gNB may use NRPPa to report the measurements to the network device, e.g. to the LMF for UE location verification.

Both the NRPPa and the LPP protocols may be transported over the control plane of the NG interface (NG-C) via Access Mobility Function (AMF).

In a *first exemplary implementation,* the network node, receives the UE Rx-Tx time difference $UE_{RTTD}$ and the TA information $TA_{report}$ from said UE, and receives the gNB Rx-Tx time difference $gNB_{RTTD}$ from said gNB. In particular, the transceiver included in the network node may receive said information. Furthermore, the circuitry included in the network device may instruct the transceiver to receive said information.

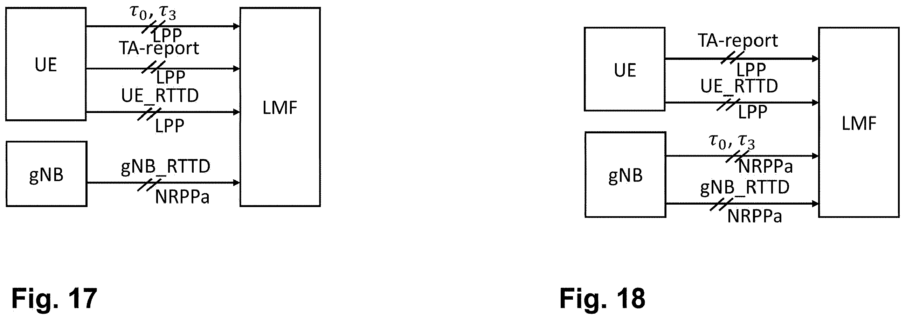

This is exemplarily shown in **Figs. 17 and 18,** wherein the UE transmits the TA-report value to the LMF. The LMF in said Figs. 17 and 18 represent the network device including the functionality of LMF. Moreover, the UE transmits the UE Rx-Tx time difference $UE_{RTTD}$ to the LMF. The transmissions of the UE may be performed using LPP, which is indicated in Figs. 17 and 18 by the parallel marking on the arrow and the label LPP. For example, the list of information, which is transmitted from the UE to the LMF may be extended to include the full TA-report as defined in the Timing Advance Report MAC CE in TS 38.321.

In addition, the gNB transmits the gNB Rx-Tx time difference $gNB_{RTTD}$ to the LMF. As mentioned above, the gNB may use NRPPa, which is indicated in Figs. 17 and 18 by the parallel marking on the arrow and the label NRPPa, to report to the network device, e.g. the LMF. In other words, UE and gNB send their data individually to LMF, which does all required processing. The RTT and/or the RTT^s may be obtained, e.g. calculated, at the LMF.

In Fig. 17, the UE may optionally transmit the feeder-link delay on downlink $\tau_0$ and the feeder-link delay on uplink $\tau_3$. In Fig. 18, the gNB may optionally transmit the feeder-link delay on downlink $\tau_0$ and the feeder-link delay on uplink $\tau_3$.

For example, TS 37.355 (17.3.0) already provides the field nr-NTA-Offset-r16 in NR-Multi-RTT-SignalMeasurementInformation, which may be modified to indicate the Timing Advance field as signaled in the Timing Advance Report MAC CE element of TS 38.321. Such modification may include the addition of a new field as used in the Timing Advance Report MAC CE.

In a *second exemplary implementation,* which provides an addition to the first exemplary implementation, the gNB may further transmit scheduling information. In other words, the LMF or network device receives from the gNB scheduling information. Such scheduling information may include the K_offset, which is explained in section *Timing advance and epoch time in NTN* above. The value K_offset indicates a scheduling offset used for the timing relationships. A comparison of said K_offset and the TA-report value may verify said TA-report value. In other words, a gNB and/or the network device including the LMF may verify a TA-report value provided by the UE. Thus, UE's TA-report may be checked for tampering by comparing it with K_offset. Options for assessing a non-malicious UE are that K_offset and TA report are within a window of N slots, or that K_offset is larger or equal to the TA report.

Such implementation may increase the security in obtaining of the RTT.

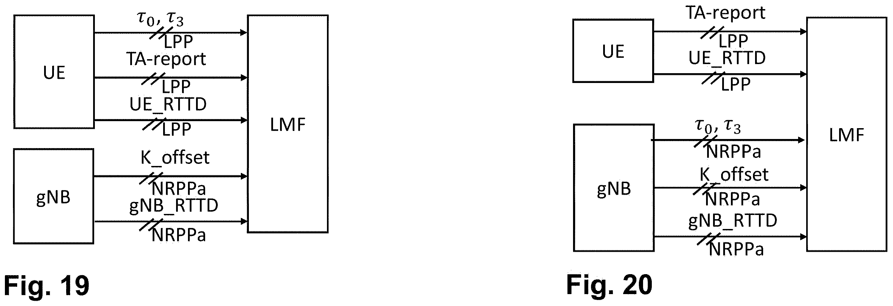

**Figs. 19 and 20** indicate exemplarily the additional transmission of the K_offset from the gNB to the LMF in addition to the gNB difference $gNB_{RTTD}$. Moreover, the UE transmits, similarly to the example of Figs. 17 and 18, the TA-report value the UE difference $UE_{RTTD}$ to the LMF.

In Fig. 19, the UE may optionally transmit the feeder-link delay on downlink $\tau_0$ and the feeder-link delay on uplink $\tau_3$. In Fig. 20, the gNB may optionally transmit the feeder-link delay on downlink $\tau_0$ and the feeder-link delay on uplink $\tau_3$.

In a third exemplary implementation, which provides an addition to the first exemplary implementation, the transceiver further receives from said gNB the TA information. In other words, the gNB may transmit the TA-report value to the network device, and thus for example to the LMF. Such implementation enables a crosscheck of the TA-report transmitted by the UE to the network device. Said crosscheck may be performed by the gNB using the K_offset value, which is available at the gNB.

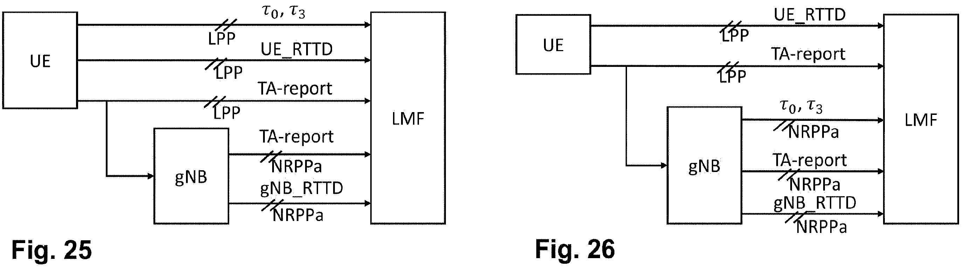

**Figs. 25 and 26** indicate exemplarily the additional transmission of the TA-report from the gNB to the LMF according to the third exemplary embodiment. For example, the UE transmits the TA-report to both, the LMF and the gNB. In this exemplary implementation, gNB transmits the TA-report and not K_offset to the LMF. LMF may check both TA-reports for tampering. Additionally, gNB may verify the TA-report using K_offset. Such implementation may increase the security in obtaining of the RTT.

In Fig. 25, the UE may optionally transmit the feeder-link delay on downlink $\tau_0$ and the feeder-link delay on uplink $\tau_3$. In Fig. 26, the gNB may optionally transmit the feeder-link delay on downlink $\tau_0$ and the feeder-link delay on uplink $\tau_3$.

In a *fourth exemplary implementation,* the network device may receive a corrected UE Rx-Tx time difference from the UE. Such a corrected UE Rx-Tx time difference $UE_{RTTD,new}$ may be based on the RTT UE Rx-Tx time difference of the UE and the correction of the TA information. For example, the corrected UE Rx-Tx time difference $UE_{RTTD,new}$ may be determined as

$$UE_{RTTD,new} = UE_{RTTD} + TA_{report} - ceil\left(\frac{UE_{RTTD}}{SD}\right) \cdot SD.$$

In other words, the corrected UE Rx-Tx time difference may be calculated as the sum of the UE Rx-Tx time difference $UE_{RTTD}$ and the corrected TA information. The UE may transmit the corrected UE Rx-Tx time difference via LPP. A modification of the LPP may be performed similarly as in the first exemplary implementation.

Furthermore, the network device and thus the LMF may receive the gNB Rx-Tx time difference from said gNB. The gNB may transmit said gNB Rx-Tx time difference via NRPPa.

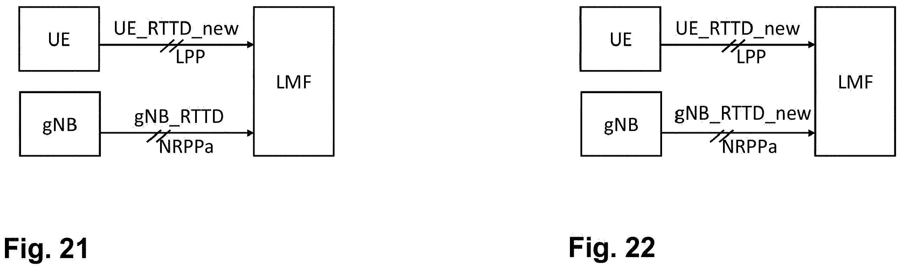

Examples for the signaling according to the fourth exemplary implementation are given in **Figs. 21 and 22.** In Fig. 21, the LMF receives the corrected UE Rx-Tx time difference $UE_{RTTD,new}$ transmitted via LPP from the UE. Moreover, in the example of Fig. 21 the gNB transmits the gNB Rx-Tx time difference.

In the example of Fig. 21, the feeder-link delay on downlink $\tau_0$ and the feeder-link delay on uplink $\tau_3$ may be included additionally in the corrected UE Rx-Tx time difference $UE_{RTTD,new}$. For example, the corrected UE Rx-Tx time difference $UE_{RTTD,new}$ may be determined as

$$UE_{RTTD,new} = UE_{RTTD} + TA_{report} - ceil\left(\frac{UE_{RTTD}}{SD}\right) \cdot SD - \tau_0 - \tau_3.$$

In the example according to Fig. 21, the network device, and for example its LMF, may determine the RTT as

$$RTT^S = UE_{RTTD,new} + gNB_{RTTD}.$$

In other words, the residual RTT includes the sum of the corrected UE Rx-Tx time difference and the gNB Rx-Tx time difference.

As an alternative, the optional values regarding the feeder-link delay on downlink $\tau_0$ and the feeder-link delay on uplink $\tau_3$ may be provided by the gNB analogously as in the examples described with respect to Figs. 18 or 20.

In Fig. 22, the LMF receives the corrected UE Rx-Tx time difference $UE_{RTTD,new}$ transmitted via LPP from the UE. Moreover, in the example of Fig. 22 the gNB may transmit a gNB Rx-Tx time difference including a correction, which is referred to as corrected gNB Rx-Tx time difference $gNB_{RTTD,new}$ in the following. Such a corrected gNB Rx-Tx time difference may be obtained as

$$gNB_{RTTD,new} = gNB_{RTTD} - \tau_0 - \tau_3.$$

In other words, the feeder link delay $\tau_0$ and $\tau_3$ may be subtracted from the gNB Rx-Tx time difference $gNB_{RTTD}$.

In the example according to Fig. 22, the network device, and for example its LMF, may determine the RTT as

$$RTT^S = UE_{RTTD,new} + gNB_{RTTD,new}.$$

In other words, the residual RTT includes the sum of the corrected UE Rx-Tx time difference and the corrected gNB Rx-Tx time difference.

Such a signaling according to the fourth exemplary implementation may reduce the overhead by transmitting adapted (corrected) values of the UE Rx-Tx time difference and/or the gNB Rx-Tx time difference.

In a *fifth exemplary implementation,* the network device receives the UE Rx-Tx time difference and a corrected TA information from said UE. For example, the UE transmits the UE Rx-Tx time difference and the corrected TA information to the network device. In addition, the network device in the fifth exemplary implementation receives the gNB Rx-Tx time difference from said gNB.

In particular, the transceiver included in the network node may receive said information transmitted by the UE and/or the gNB. Furthermore, the circuitry included in the network device may instruct the transceiver to receive said information.

For example, a corrected TA information may be obtained based on the on the TA information and the correction of the TA information. The corrected TA information may be obtained as sum of the TA information and the correction of the TA information,

$$TA_{report,new} = TA_{report} - ceil\left(\frac{UE_{RTTD}}{SD}\right) \cdot SD.$$

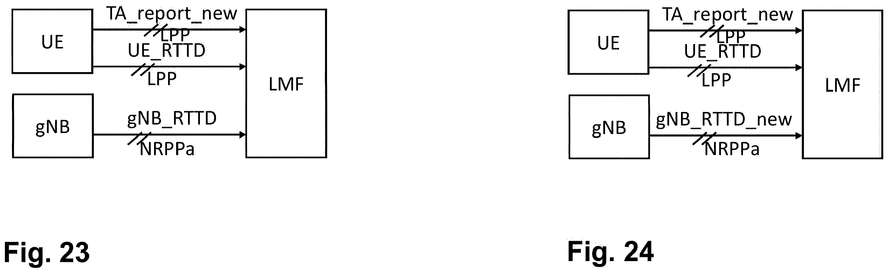

A first example of the fifth exemplary implementation is provided in **Fig. 23.** For example, the UE transmits the UE Rx-Tx time difference and the corrected TA information to the network device. The UE may transmit the UE Rx-Tx time difference and/or the correction of the TA information via LPP.

Moreover, the corrected TA information may include the feeder-link delay on downlink $\tau_0$ and the feeder-link delay on uplink $\tau_3$. In such a case the above-defined corrected TA information $TA_{report,new}$ may be adjusted by subtracting said feeder-link delay values,

$$TA_{report,new} = TA_{report} - ceil\left(\frac{UE_{RTTD}}{SD}\right) \cdot SD - \tau_0 - \tau_3.$$

Furthermore, the network device and thus the LMF may receive the gNB Rx-Tx time difference from said gNB. The gNB may transmit said gNB Rx-Tx time difference via NRPPa.

In the first example of the fifth exemplary implementation, the RTT may be determined as sum of the UE Rx-Tx time difference, the gNB Rx-Tx time difference and the corrected TA information,

$$RTT^S = UE_{RTTD} + gNB_{RTTD} + TA_{report,new}.$$

In other words, the residual RTT according to the first example of the fifth exemplary implementation includes the sum of the UE Rx-Tx time difference, the corrected gNB Rx-Tx time difference and the corrected TA information.

A second example of the fifth exemplary implementation is provided in **Fig. 24.** For example, the UE transmits the UE Rx-Tx time difference and the corrected TA information to the network device. The UE may transmit the UE Rx-Tx time difference and/or the correction of the TA information via LPP.

The corrected TA information according to the second example may be obtained as sum of the TA information and the correction of the TA information,

$$TA_{report,new} = TA_{report} - ceil\left(\frac{UE_{RTTD}}{SD}\right) \cdot SD.$$

Furthermore, the network device and thus the LMF may receive the a corrected gNB Rx-Tx time difference from said gNB. The gNB may transmit said gNB Rx-Tx time difference via NRPPa.

Such a corrected gNB Rx-Tx time difference may be obtained as

$$gNB_{RTTD,new} = gNB_{RTTD} - \tau_0 - \tau_3.$$

In other words, the feeder link delays $\tau_0$ and $\tau_3$ may be subtracted from the gNB Rx-Tx time difference $gNB_{RTTD}$ in the second example of the fifth exemplary implementation.

In the example according to Fig. 24, the network device, and for example its LMF, may determine the RTT as

$$RTT^S = UE_{RTTD} + gNB_{RTTD,new} + TA_{report,new}.$$

In other words, the residual RTT according to the second example of the fifth exemplary implementation includes the sum of the UE Rx-Tx time difference, the corrected gNB Rx-Tx time difference and the corrected TA information.

In a *sixth exemplary implementation,* the network device may receive from the gNB the UE Rx-Tx time difference, the TA information, and the gNB Rx-Tx time difference. In particular, the transceiver included in the network node may receive said information transmitted by the gNB. Furthermore, the circuitry included in the network device may instruct the transceiver to receive said information. The gNB may transmit said information including the UE Rx-Tx time difference, the TA information, and the gNB Rx-Tx time difference via NRPPa.

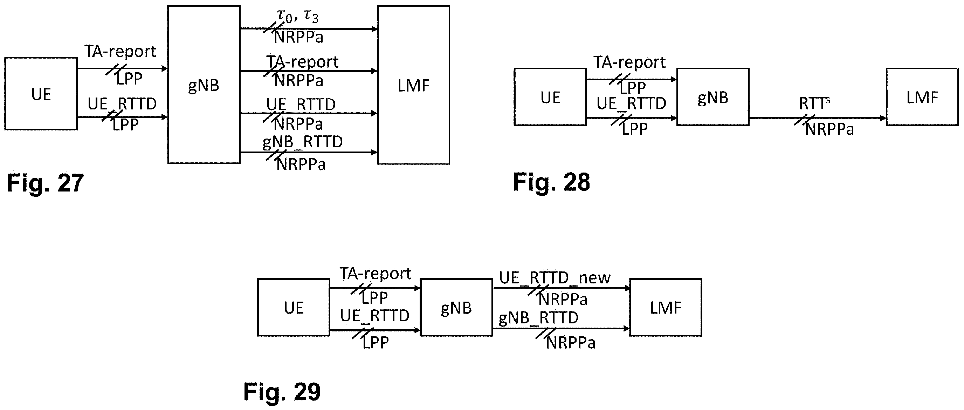

An example for the signaling according to the sixth exemplary implementation, is given in **Fig. 27.** In Fig. 27, the LMF receives from the gNB the UE Rx-Tx time difference, the TA information, and the gNB Rx-Tx time difference. Moreover, the gNB may transmit optionally the feeder-link delay on downlink $\tau_0$ and the feeder-link delay on uplink $\tau_3$ to the LMF. In the example of Fig. 27, the UE transmits the TA information, e.g. TA-report, and the UE Rx-Tx time difference to the gNB. The UE may transmit the TA information and the UE Rx-Tx time difference to the gNB using LPP.

For example, the gNB may check the TA-report received from the UE for tampering, e.g. by using the K_offset value, which is available at the gNB for scheduling. If the TA-report provided by the UE is not correct, communication with the UE may not be possible due to the mismatch of UE TA and K_offset. Therefore, TA-report transferred from gNB to LMF may be more reliable than transferred from UE.

In the sixth exemplary implementation, the network device may obtain the RTT as the sum of the UE Rx-Tx time difference, the gNB Rx-Tx time difference and the corrected TA information, e.g.

$$RTT = UE_{RTTD} + gNB_{RTTD} + TA_{report} - ceil\left(\frac{UE_{RTTD}}{SD}\right) \cdot SD.$$

In case when the feeder-link delays are taken into account, the network device may obtain the RTT by subtracting said feeder-link delays from the above-defined RTT,

$$RTT^S = UE_{RTTD} + gNB_{RTTD} + TA_{report} - ceil\left(\frac{UE_{RTTD}}{SD}\right) \cdot SD - \tau_0 - \tau_3.$$

In a *seventh exemplary implementation,* the network device may receive the RTT from the gNB. In particular, the transceiver included in the network node may receive said RTT transmitted by the gNB. Furthermore, the circuitry included in the network device may instruct the transceiver to receive said RTT. For example, the gNB may receive the TA information and the UE Rx-Tx time difference from the UE. The gNB may calculate the RTT based on the receive information. In other words, the gNB is pre-processing the available and obtained information to determine (calculate) RTT.

This is exemplarily shown in **Fig. 28,** wherein the gNB receives the TA information and the UE Rx-Tx time difference from the UE. The UE may transmit the TA information and the UE Rx-Tx time difference to the gNB using LPP. The gNB determines the RTT as the sum of the UE Rx-Tx time difference, the gNB Rx-Tx time difference and the corrected TA information. In case when the feeder-link delays are taken into account, the network device may obtain the RTT by additionally subtracting said feeder-link delays $\tau_0$ and $\tau_3$.

Such implementation may reduce the signaling overhead and may increase the security, as the gNB may verify the TA-report analogous as in the sixth exemplary implementation.

In an *eight exemplary implementation,* the network device may receive a corrected UE Rx-Tx time difference and the gNB Rx-Tx time difference from the gNB. In particular, the transceiver included in the network node may receive said information transmitted by the gNB. Furthermore, the circuitry included in the network device may instruct the transceiver to receive said information.

The corrected UE Rx-Tx time difference may be based on the UE Rx-Tx time difference and the correction of the TA information. In particular, the corrected UE Rx-Tx time difference $UE_{RTTD,new}$ may be a sum of the UE Rx-Tx time difference $UE_{RTTD}$, the TA information $TA_{report}$, and the correction of the TA information,

$$UE_{RTTD,new} = UE_{RTTD} + TA_{report} - ceil\left(\frac{UE_{RTTD}}{SD}\right) \cdot SD.$$

For example, in case the feeder-link delays $\tau_0$ and $\tau_3$ may be included in the corrected UE Rx-Tx time difference by subtraction, e.g.

$$UE_{RTTD,new} = UE_{RTTD} + TA_{report} - ceil\left(\frac{UE_{RTTD}}{SD}\right) \cdot SD - \tau_0 - \tau_3.$$

An exemplary signaling according to the eight exemplary implementation is provided in **Fig. 29.** Similarly as in the sixth and the seventh exemplary implementation, the UE transmits the TA information and the UE Rx-Tx time difference to the gNB, e.g. using LPP. The gNB may process the received information in order to obtain the corrected UE Rx-Tx time difference. The gNB may transmit the corrected UE Rx-Tx time difference and the gNB Rx-Tx time difference to the network device, and thus to the LMF.

The network device may obtain then the RTT by a sum of the corrected UE Rx-Tx time difference and the gNB Rx-Tx time difference, e.g.

$$RTT^S = UE_{RTTD,new} + gNB_{RTTD}$$

Similarly as in the sixth and the seventh exemplary implementation, the signaling according to the eight exemplary implementation may reduce the signaling overhead and may increase the security. Analogous to the sixth and the seventh exemplary implementation, the gNB may verify the TA-report using the K_offset value.

As already indicated above, an estimation of a position of the UE may be obtained based on the RTT. The RTT may be obtained according to any of the above-described exemplary implementations. On overview and an exemplary relation between RTT and the position of an UE is given in section *Round Trip Time.*

The obtaining of the estimation of the position of the UE may further include a compensation for a movement of a non-terrestrial relay (e.g. a satellite) and/or a movement of Earth.

Since the UE location is a vector with three components, RTT may be measured at least three times. For UE location estimation in NTN using Multi-RTT with a single satellite in view, the RTT is measured repeatedly with the satellite at different points in time. For three RTT measurements UE appears in the system of equations at six different positions.

Thus, the obtained RTT may be a first RTT, and the circuitry included in the network device may further obtain a second RTT and a third RTT for the estimation of the position of the UE. In other words, at least three RTTs at different times $t_i$ may be obtained by the network device.

The LMF may additionally compensate for the motion of satellite and Earth before solving for the UE position. Such correction can be seen as rewinding satellite and Earth such that the UE position appears fixed. Such corrections may be performed by including appropriate rotation matrices into the equations for position determination.

For example, the relation between the RTT and the position of the UE in the i-th measurement may be given as

$$RTT_i^s = RTT_i - \tau_{i,0} - \tau_{i,3}$$

$$= \frac{1}{c_0} \left\| R_{i,0}^{-1} \left( p_{sat}(t_{i,1}) - p_{UE}(t_{i,2}) \right) \right\| + \frac{1}{c_0} \left\| R_{i,1}^{-1} \left( p_{UE}(t'_{i,4}) - p_{sat}(t'_{i,5}) \right) \right\|,$$

wherein $R_{i,0}^{-1}$ and $R_{i,1}^{-1}$ represent rotation matrices, $p_{sat}$ refers to the position of the satellite at a specific time, $p_{UE}$ corresponds to the position of the UE at a specific time, $c_0$ is the speed of light. The specific timings $t_{i,1}$, $t_{i,2}$, $t'_{i,4}$ and $t'_{i,5}$ refer to the timing as shown in Fig. 16, which is explained in detail above.

Furthermore, the network device (e.g. the circuitry included in the network device) may verify a reported position of the UE based on the estimation of the position of the UE, which is based on the obtained RTT.

For example, the UE may determine its position using GNSS (global navigation satellite system) based location information. However, network operators require knowing reliably the location information of a UE attached to the network to select the appropriate core network. Malicious UEs might fake their selected PLMN (Public Land Mobile Network). Relying only on the GNSS based location information reported by the UE is not considered reliable.

Thus, a verification of the location may be based on an estimated position, which is based on the RTT. Such verification may be performed independently from the location information reported by UE. The UE location information may considered verified if the reported UE location is consistent with the network based assessment to within 5-10 km (i.e., a size similar to a terrestrial macro cell), enabling country discrimination and selection of an appropriate core network in order to support all the regulatory services (i.e. emergency call, lawful intercept, public warning, charging/billing).

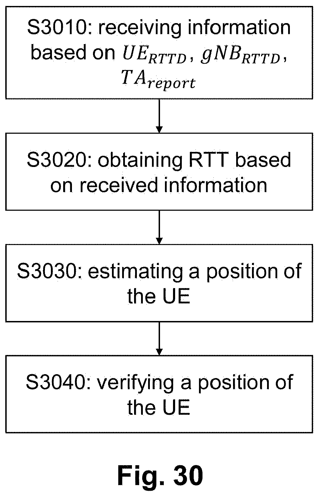

**Fig. 30** shows a flow diagram of an exemplary method to be performed at the network device. In particular, the network device may receive (S3010) information based on one or more of the UE Rx-Tx time difference, the gNB Rx-Tx time difference, the TA information and a correction of the TA information.

A RTT may be obtained based on the received information. A method is provided for obtaining a round trip time by a network device for a non-terrestrial network. In particular, a RTT is obtained (S3020) for the estimation of a position of a UE. The obtaining of the RTT is based on

- a user equipment, UE, Rx-Tx time difference, which is a difference between a received timing of a subframe boundary in an downlink frame of a UE and a transmit timing of a subframe boundary in an uplink frame of the UE, which is closest in time to the subframe received by the UE,
- a gNB Rx-Tx time difference, which is a difference between a received timing of a subframe boundary in a downlink frame of a gNB and a transmit timing of a subframe boundary in an uplink frame of the gNB, which is closest in time to the subframe received by the gNB,
- a timing advance, TA, information for said UE, the TA information indicating a rounded value of a timing advance value, and
- a correction of said timing advance, TA, information.

The position of the UE may be estimated (S3030) as explained in detail above. Moreover, the position of the UE, e.g. a position reported by the UE, may be verified (S3040) based on the estimated position.

The present disclosure is not limited to network devices including the functionality of the LMF. It is noted that the LMF functionality provided by the LMF block in Figs. 17 to 29 may be included in the network device. For example, the network device obtains a RTT based on the information provided by the UE and/or the gNB and provides said RTT to the LMF, which may be hosted in another device.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

*Summary of embodiments*

Correspondingly to the above mentioned network node and the related further examples and implementations, the present disclosure provides the corresponding methods to be executed by a network node or by their processing circuitries.

A network device is provided comprising: a transceiver and circuitry which, in operation obtains a round trip time, RTT, for an estimation of the position of a user equipment, UE, wherein the obtaining of the RTT is based on (i) a user equipment, UE, Rx-Tx time difference, which is a difference between a received timing of a subframe boundary in an downlink frame of a UE and a transmit timing of a subframe boundary in an uplink frame of the UE, which is closest in time to the subframe received by the UE, (ii) a gNB Rx-Tx time difference, which is a difference between a received timing of a subframe boundary in a downlink frame of a gNB and a transmit timing of a subframe boundary in an uplink frame of the gNB, which is closest in time to the subframe received by the gNB, (iii) a timing advance, TA, information for said UE, the TA information indicating a rounded value of a timing advance value, and (iv) a correction of said timing advance, TA, information.

For example, the circuitry, in operation, further obtains an estimation of a position of the UE based on the obtained RTT.

For instance, the obtaining of the estimation of the position of the UE further includes a compensation for a movement of a non-terrestrial relay and/or a movement of Earth.

As an exemplary implementation, the obtained RTT is a first RTT, and the circuitry, in operation, further obtains a second RTT and a third RTT for the estimation of the position of the UE.

In some implementations, the circuitry, in operation, further verifies a reported position of the UE based on the estimation of the position of the UE, which is based on the obtained RTT.

For instance, the RTT is determined according to

$$RTT = UE_{RTTD} + gNB_{RTTD} + TA_{report} - ceil\left(\frac{UE_{RTTD}}{SD}\right) \cdot SD,$$

wherein, $UE_{RTTD}$ represents the UE Rx-Tx time difference, $gNB_{RTTD}$ represents the gNB Rx-Tx time difference, $TA_{report}$

$$ceil\left(\frac{UE_{RTTD}}{SD}\right) \cdot SD$$

represents the TA information and represents the correction of the TA information, wherein *SD* is a slot duration, and *ceil*( ) represents the ceiling function which returns the least integer greater than or equal to its argument.

In some implementations, the obtaining of the RTT is further based on a feeder-link delay on downlink and/or a feeder-link delay on uplink.

As an exemplary implementation, the transceiver, in operation, receives the feeder-link delay on downlink and the feeder-link delay on uplink from the UE, the gNB, or a NTN entity.

For example, the transceiver, in operation, further receives the UE Rx-Tx time difference from said UE, receives the TA information from said UE, and receives the gNB Rx-Tx time difference from said gNB.

For example, the transceiver, in operation, further receives from said gNB scheduling information.

For instance, the transceiver, in operation, further receives from said gNB the TA information.

In some implementations, the transceiver, in operation, further receives a corrected UE Rx-Tx time difference from said UE, the corrected UE Rx-Tx time difference being based on the UE Rx-Tx time difference, the TA information and the correction of the TA information, and receives the gNB Rx-Tx time difference from said gNB.

For example, the transceiver, in operation, further receives the UE Rx-Tx time difference and a corrected TA information from said UE, and receives the gNB Rx-Tx difference from said gNB.

For instance, the transceiver, in operation, further receives from the gNB the UE Rx-Tx time difference, the TA information, and the gNB Rx-Tx time difference.

As an exemplary implementation, the transceiver, in operation, further receives the RTT, which is based on the UE Rx-Tx time difference, the gNB Rx-Tx time difference, the TA information and the correction of the TA information from said gNB.

For instance, the transceiver, in operation, further receives from the gNB a corrected UE Rx-Tx time difference, which is based on the UE Rx-Tx time difference, the TA information and the correction of the TA information, and the gNB Rx-Tx time difference.

A method is provided for obtaining a round trip time by a network device for a non-terrestrial network, the method comprising obtaining a round trip time, RTT, for an estimation of the position of a user equipment, UE, wherein the obtaining of the RTT is based on (i) a user equipment, UE, Rx-Tx time difference, which is a difference between a received timing of a subframe boundary in an downlink frame of a UE and a transmit timing of a subframe boundary in an uplink frame of the UE, which is closest in time to the subframe received by the UE, (ii) a gNB Rx-Tx time difference, which is a difference between a received timing of a subframe boundary in a downlink frame of a gNB and a transmit timing of a subframe boundary in an uplink frame of the gNB, which is closest in time to the subframe received by the gNB, (iii) a timing advance, TA, information for said UE, the TA information indicating a rounded value of a timing advance value, and (iv) a correction of said timing advance, TA, information.

It is noted that the method may be also executed on the processing circuitry of the network device or by an integrated circuit. In such case, instead of the reception and transition steps the method includes providing to a transceiver (or merely to an output) data for (wireless) transmission and obtaining from a transceiver (or merely at an input) data (e.g. the information on which the obtaining of the RTT is based).

In the present disclosure, an integrated circuit (IC) is provided which in operation, performs obtaining a round trip time, RTT, for an estimation of the position of a user equipment, UE, wherein the obtaining of the RTT is based on (i) a user equipment, UE, Rx-Tx time difference, which is a difference between a received timing of a subframe boundary in an downlink frame of a UE and a transmit timing of a subframe boundary in an uplink frame of the UE, which is closest in time to the subframe received by the UE, (ii) a gNB Rx-Tx time difference, which is a difference between a received timing of a subframe boundary in a downlink frame of a gNB and a transmit timing of a subframe boundary in an uplink frame of the gNB, which is closest in time to the subframe received by the gNB, (iii) a timing advance, TA, information for said UE, the TA information indicating a rounded value of a timing advance value, and (iv) a correction of said timing advance, TA, information. The IC further comprises an input to which the system information is provided from a receiver. Such input may be in practical implementations be connectable or connected with a transceiver which would then perform a reception of information.

The present disclosure further provides program code which when executed on one or more processors causes the one or more processors to execute any of the methods mentioned above. The program code may be stored on a non-transitory medium.

The present disclosure provides a communication system, which includes the network device as described above, one or more user devices and one or more gNBs. It may further comprise one or more NTN entities.

**Claims**

1. A network device for a non-terrestrial network, comprising:

   a transceiver, and
   circuitry which, in operation:

   obtains a round trip time, RTT, for an estimation of the position of a user equipment, UE,
   wherein the obtaining of the RTT is based on

   - a user equipment, UE, Rx-Tx time difference, which is a difference between a received timing of a
   subframe boundary in a downlink frame of a UE and a transmit timing of a subframe boundary in an
   uplink frame of the UE, which is closest in time to the subframe received by the UE,
   - a gNB Rx-Tx time difference, which is a difference between a received timing of a subframe boundary
   in a downlink frame of a gNB and a transmit timing of a subframe boundary in an uplink frame of the
   gNB, which is closest in time to the subframe received by the gNB,
   - a timing advance, TA, information for said UE, the TA information indicating a rounded value of a
   timing advance value, and
   - a correction of said TA information.

2. The network device according to claim 1, wherein the circuitry, in operation, further obtains an estimation of a position of the UE based on the obtained RTT.

3. The network device according to claim 2, wherein the obtaining of the estimation of the position of the UE further includes a compensation for a movement of a non-terrestrial relay and/or a movement of Earth.

4. The network device according to any of the claims 1 to 3, wherein the RTT is determined according to

$$RTT = UE_{RTTD} + gNB_{RTTD} + TA_{report} - ceil\left(\frac{UE_{RTTD}}{SD}\right) \cdot SD,$$

wherein, $UE_{RTTD}$ represents the UE Rx-Tx time difference, $gNB_{RTTD}$ represents the gNB Rx-Tx time difference,

$TA_{report}$ represents the TA information and $ceil\left(\frac{UE_{RTTD}}{SD}\right) \cdot SD$ represents the correction of the TA information, wherein $SD$ is a slot duration, and $ceil($ ) represents the ceiling function which returns the least integer greater than or equal to its argument.

5. The network device according to any of the claims 1 to 4, wherein the obtaining of the RTT is further based on a feeder-link delay on downlink and/or a feeder-link delay on uplink.

6. The network device according to claim 5, wherein the transceiver, in operation, receives the feeder-link delay on downlink and the feeder-link delay on uplink from the UE, the gNB, or a NTN entity.

7. The network device according to any of the claims 1 to 6, wherein the transceiver, in operation, further

   receives the UE Rx-Tx time difference from said UE,
   receives the TA information from said UE, and
   receives the gNB Rx-Tx time difference from said gNB.

8. The network device according to claim 7, wherein the transceiver, in operation, further receives from said gNB scheduling information.

9. The network device according to claim 7, wherein the transceiver, in operation, further receives from said gNB the TA information.

**10.** The network device according to any of the claims 1 to 6, wherein the transceiver, in operation, further

receives a corrected UE Rx-Tx time difference from said UE, the corrected UE Rx-Tx time difference being based on the UE Rx-Tx time difference, the TA information and the correction of the TA information, and receives the gNB Rx-Tx time difference from said gNB.

**11.** The network device according to any of the claims 1 to 5, wherein the transceiver, in operation, further

receives the UE Rx-Tx time difference and a corrected TA information from said UE, and receives the gNB Rx-Tx difference from said gNB.

**12.** The network device according to any of the claims 1 to 6, wherein the transceiver, in operation, further receives from the gNB

- the UE Rx-Tx time difference,
- the TA information, and
- the gNB Rx-Tx time difference.

**13.** The network device according to any of the claims 1 to 5, wherein the transceiver, in operation, further receives the RTT, which is based on the UE Rx-Tx time difference, the gNB Rx-Tx time difference, the TA information and the correction of the TA information from said gNB.

**14.** The network device according to any of the claims 1 to 5, wherein the transceiver, in operation, further receives from the gNB

- a corrected UE Rx-Tx time difference, which is based on the UE Rx-Tx time difference, the TA information and the correction of the TA information, and
- the gNB Rx-Tx time difference.

**15.** A method for obtaining a round trip time by a network device for a non-terrestrial network, the method comprising:

obtaining a round trip time, RTT, for an estimation of the position of a user equipment, UE, wherein the obtaining of the RTT is based on

- a user equipment, UE, Rx-Tx time difference, which is a difference between a received timing of a subframe boundary in an downlink frame of a UE and a transmit timing of a subframe boundary in an uplink frame of the UE, which is closest in time to the subframe received by the UE,
- a gNB Rx-Tx time difference, which is a difference between a received timing of a subframe boundary in a downlink frame of a gNB and a transmit timing of a subframe boundary in an uplink frame of the gNB, which is closest in time to the subframe received by the gNB,
- a timing advance, TA, information for said UE, the TA information indicating a rounded value of a timing advance value, and
- a correction of said TA information.

SMF
- UE IP address allocation
- PDU Session Control

AMF
- NAS Security
- Idle State Mobility Handling

UPF
- Mobility Anchoring
- PDU Handling

internet

5 GC

gNB or ng - eNB
- Inter Cell RRM
- RB Control
- Connection Mobility Cont.
- Radio Admission Control
- Measurement Configuration & Provision
- Dynamic Resource Allocation (Scheduler)

NG - RAN

**Fig. 2**

5GC

NG-RAN

AMF/UPF

AMF/UPF

NG-C/NG-U

gNB

ng-eNB

ng-eNB

gNB

Xn

**Fig. 1**

**Fig. 3**

**Fig. 4**

**Fig. 5**

NG Radio Access Network

Remote Radio Unit

UE ←NR-Uu→ [satellite] ←NR-Uu→ [NTN gateway] gNB ←NG→ 5G CN ←N6→ Data Network

**Fig. 6**

NG Radio Access Network

UE ←NR-Uu→ gNB [satellite] ←NG over SRI→ [NTN gateway] ←NG→ 5G CN ←N6→ Data Network

**Fig. 7**

Fig. 8

Fig. 9

**Fig. 10**

EP 4 418 765 A1

```
                    ┌─────────┐                      ┌─────────┐
                    │   gNB   │                      │   UE    │
                    └─────────┘                      └─────────┘
                         │                                │
       gNB Tx            │────────── Send DL-PRS ─────────▶│
       t₀                │                                │ UE Rx
                         │                                │ t₁
                         │                                │
                         │                                │ UE Tx
                         │                                │ t₂
                         │◀───────── Send UL-SRS ─────────│
       gNB Rx            │                                │
       t₃                │                                │
```

**Fig. 11**

Fig. 12

gNB-Tx

| SF j | SF j+1 | SF j+2 | |

1310

TA

one-way delay

UE-Rx

| SF i | SF i+1 | SF i+2 | |

1311

UE RTTD (>0)

$TA_{report}$

1320

UE-Tx

| SF j | SF j+1 | SF j+2 | SF j+3 | SF j+4 |

$RTT = TA + gNB\ RTTD$
$= (TA_{report} - 1) + UE\ RTTD + gNB\ RTTD$

gNB-Rx

| SF i | SF i+1 | SF i+2 | |

1330 gNB RTTD

## Fig. 13

gNB-Tx

| SF j | SF j+1 | SF j+2 | |

1410

TA

one-way delay

UE-Rx

| SF i | SF i+1 | SF i+2 | |

1411

UE RTTD (<0)

1420

$TA_{report}$

UE-Tx

| SF j | SF j+1 | SF j+2 | SF j+3 | SF j+4 |

$RTT = TA + gNB\ RTTD$
$= TA_{report} + UE\ RTTD + gNB\ RTTD$

gNB-Rx

| SF i | SF i+1 | SF i+2 | |

1430 gNB RTTD

## Fig. 14

EP 4 418 765 A1

**Fig. 15**

DL-PRS

gNB $t_{gNB}(t)$ ———————— Send DL-PRS
———— Receive DL-PRS

$\tau_0$

Sat $r_{Sat}(t)$

$\tau_1$

UE $r_{UE}(t)$

$t_0 \quad t_1 \quad t_2$

**Fig. 16**

Scheduled SRS-reception

UL-SRS

Send SRS-config

gNB $t_{gNB}(t)$ ———— Receive SRS-config

$\tau_3$

Sat $r_{Sat}(t)$

$t_5'$

TA

UE $r_{UE}(t)$

$t_2'$ $\tau_2$ $t_3'$ (RRC scheduled slot, DL RX timing)

$t_{UE}(t)$

$t_0'$ $t_4' = t_3' - TA$ RRC scheduled slot

Fig. 18

Fig. 17

**Fig. 19**

**Fig. 20**

EP 4 418 765 A1

**Fig. 21**

**Fig. 22**

EP 4 418 765 A1

Fig. 23

Fig. 24

EP 4 418 765 A1

Fig. 26

Fig. 25

**Fig. 28**

**Fig. 27**

**Fig. 29**

S3010: receiving information
based on $UE_{RTTD}$, $gNB_{RTTD}$,
$TA_{report}$

S3020: obtaining RTT based
on received information

S3030: estimating a position of
the UE

S3040: verifying a position of
the UE

**Fig. 30**

Europäisches
Patentamt

European
Patent Office

Office européen
des brevets

## EUROPEAN SEARCH REPORT

Application Number

EP 23 15 7356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETER KLENNER ET AL: "Discussion on Network-verified UE location for NTN", 3GPP DRAFT; R1-2211601; TYPE DISCUSSION; NR_NTN_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 – 20221118 7 November 2022 (2022-11-07), XP052222165, Retrieved from the Internet: URL:https://www.3gpp.org/ftp/TSG_RAN/WG1_RL1/TSGR1_111/Docs/R1-2211601.zip R1-2211601 RAN1-111 Network-verified UE location for NR-NTN.docx [retrieved on 2022-11-07] | 1-3,5-15 | INV. H04W56/00 H04W64/00 |
| A | * the whole document * | 4 | |
| | ----- | | |

TECHNICAL FIELDS
SEARCHED      (IPC)

H04W
G01S

The present search report has been drawn up for all claims

| Place of search | Date of completion of the search | Examiner |
|---|---|---|
| The Hague | 25 July 2023 | Dejonghe, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 418 765 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Study on New Radio (NR) to support non-terrestrial networks, version 15.4.0. *3GPP TR 38.811*

- Solutions for NR to support non-terrestrial networks, version 16.0.0. *3GPP TR 38.821*